# EUROPEAN PATENT SPECIFICATION

(11) **EP 4 266 457 B1**
(45) Date of publication and mention of the grant of the patent: **09.04.2025**
(21) Application number: 22837956.6
(22) Date of filing: 06.07.2022
(51) Int. Cl.: H01M 10/6567, H01M 10/6551, H01M 10/6556, H01M 50/211, H01M 10/613, H01M 10/625, H01M 10/6554, H01M 10/6568, H01M 50/20, H01M 50/209, H01M 50/262, H01M 50/242, H01M 10/647, H01M 10/6557

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 06.07.2021 KR 20210088441
(43) Date of publication of application: 25.10.2023
(73) Proprietor: LG Energy Solution, Ltd., Seoul 07335 (KR)
(72) Inventor: KIM, Min Seop, Daejeon 34122 (KR); SEONG, Junyeob, Daejeon 34122 (KR)
(74) Representative: Plasseraud IP
(86) International application number: PCT/KR2022/009720
(87) International publication number: WO 2023/282604

(56) References cited:
- EP-A1- 3 327 821
- WO-A1-2021/075665
- DE-A1- 102017 222 771
- JP-A- 2012 038 709
- JP-A- 2014 216 298
- KR-A- 20120 096 886
- KR-A- 20130 112 117
- KR-A- 20190 070 548
- KR-A- 20200 136 229
- KR-A- 20200 136 229

## Description

### [TECHNICAL FIELD]

### Cross Citation with Related Application(s)

This application claims the benefit of Korean Patent Application No. 10-2021-0088441 filed on July 6, 2021 with the Korean Intellectual Property Office.

The present disclosure relates to a battery module and a battery pack including the same, and more particularly, to a cooling-integrated large-capacity battery module and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are arranged with a separator being interposed between them, and a battery case which seals and houses the electrode assembly together with an electrolytic solution.

Generally, the lithium secondary battery may be classified based on the shape of the exterior material into a can-type secondary battery in which the electrode assembly is mounted in a metal can, and a pouch-type secondary battery in which the electrode assembly is mounted in a pouch of an aluminum laminate sheet.

In the case of a secondary battery used for small-sized devices, two to three battery cells are arranged, but in the case of a secondary battery used for a middle or large-sized device such as an automobile, a battery module in which a large number of battery cells are electrically connected is used. In such a battery module, a large number of battery cells are connected to each other in series or parallel to form a cell assembly, thereby improving capacity and output. Further, one or more battery modules can be mounted together with various control and protection systems such as a BDU (battery disconnect unit), a BMS (battery management system) and a cooling system to form a battery pack.

A battery module and a battery pack including the battery module must satisfy various functions. First, it must satisfy structural durability against various environments, vibrations, impacts, and the like. Second, the battery cells inside the battery pack generate electrical energy and dissipate heat, so that a cooling system for cooling them is essential. These form a complex structure within a limited space, which may cause inefficiency in the assembly process.

Therefore, there is a need to develop a battery module which simplifies a cooling structure, ensures structural durability, and is improved in capacity, space utilization and assembly property by simply and intensively arranging internal parts and battery modules, and a battery pack including the same.

EP 3 327 821 A1 concerns a battery module assembly including: a module array body including two or more unit modules, each including a plurality of battery cells and a combination-type module housing that includes a first space set by combining a plurality of plate members, and a second space set in the first space while a fixing bracket is additionally combined to one of the plurality of plate members, KR 2020 0136229 A concerns a battery module comprising: a cell assembly in which a plurality of battery cells are stacked; and a lower plate disposed under the cell assembly. DE 10 2017 222771 A1 concerns a storage device for storing electrical energy for a motor vehicle, with a plurality of storage cells arranged one after the other along a stacking direction and forming at least one cell stack with a bracing device having two end plates and at least one tension element connected to the end plates, by means of which the storage cells arranged between the end plates along the stacking direction are braced together along the stacking direction.

### [DETAILED DESCRIPTION OF THE INVENTION]

### [Technical Problem]

It is an object of the present disclosure to provide a battery module which is improved in durability against vibrations, impacts and the like together with a simplified cooling structure, and a battery pack including the same.

However, the problem to be solved by embodiments of the present disclosure is not limited to the above-described problems and can be variously expanded within the scope of the technical idea included in the present disclosure.

### [Technical Solution]

According to one embodiment of the present disclosure, there is provided a battery module comprising: a battery cell stack in which a plurality of battery cells are stacked; a module frame that houses the battery cell stack; a first end plate and a second end plate that cover one side and the other side of the battery cell stack, respectively; a heat sink that is located under a bottom part of the module frame; a coolant injection port that supplies coolant to the heat sink; and a coolant discharge port that discharges the coolant from the heat sink. The first end plate comprises first mounting parts that are formed on one surface of the first end plate. The module frame comprises a first module frame protrusion and a second module frame protrusion that protrude from the bottom part of the module frame so as to pass the first end plate. The coolant injection port is located on the first module frame protrusion, and the coolant discharge port is located on the second module frame protrusion. The coolant injection port and the coolant discharge port are spaced apart from each other along the width direction of the first end plate, and the first mounting parts are located between the coolant injection port and the coolant discharge port.

The coolant injection port and the coolant discharge port may be located so as to correspond to both ends in a width direction of the first end plate.

A mounting hole opened along the height direction may be formed in the first mounting part.

One of the first mounting parts may be located between the central part of the first end plate and the coolant injection port, and another one of the first mounting parts may be located between the central part of the first end plate and the coolant discharge port.

A first guide part may be formed in the central part of the first end plate, and a guide hole opened along the height direction may be formed in the first guide part.

A second guide part may be formed in at least one location between a central part of the second end plate and both ends in a width direction of the second end plate.

Second mounting parts may be formed between the central part of the second end plate and one end in the width direction of the second end plate, and between the central part of the second end plate and the other end in the width direction of the second end plate, respectively.

A second guide part may be formed between any one of the second mounting parts and the one end in the width direction of the second end plate.

The bottom part of the module frame and the heat sink may form a flow path for the coolant, and the bottom part of the module frame may be in contact with the coolant.

The heat sink may comprise a lower plate that is joined to the bottom part of the module frame, and a recessed part formed to be recessed downward from the lower plate.

According to another embodiment of the present disclosure, there is provided a battery pack comprising: the above-mentioned battery module, and a pack frame that houses the battery module, wherein the first mounting parts are fastened to the pack frame.

A first guide part may be formed in the central part of the first end plate, and a guide hole opened along the height direction may be formed in the first guide part.

The pack frame may comprise a pack bottom part where the battery module is disposed and a guide pin protruding upward from the pack bottom part, and when the battery module is disposed on the pack bottom part, the guide pin may pass through the guide hole.

### [Advantageous Effects]

According to embodiments of the present disclosure, the cooling-integrated large-capacity battery module in which the number of included battery cells can allow increase in the capacity and simplification in the internal parts and structure constituting the battery pack. In particular, the cooling structure and other components can be intensively arranged together with the battery module to increase capacity and space utilization. In addition, by adjusting the positions of the port of the cooling structure and the mounting part for fixing the module, it is possible to increase the durability against vibration, impact and the like.

Further, the large-capacity battery module is housed in the pack frame through the guide pin structure, thereby capable of improving the processability of manufacture.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view showing a battery module according to one embodiment of the present disclosure;
Fig. 2 is an exploded perspective view of the battery module of Fig. 1;
Fig. 3 is a perspective view of a battery cell included in the battery module of Fig. 2;
Fig. 4 is an exploded perspective view which enlarges and shows a first end plate section of the battery module of Fig. 1;
Fig. 5 is a perspective view which shows the battery module of Fig. 1 by changing the viewing angle so that a heat sink is made visible;
Fig. 6 is a perspective view showing a heat sink included in the battery module of Fig. 2;
Fig. 7 is a cross-sectional view which shows a cross section taken along the cutting line A-A' of Fig. 6;
Fig. 8 is a perspective view which shows the battery module of Fig. 1 by changing the viewing angle so that the second end plate is made visible;
Fig. 9 is an exploded perspective view showing a battery pack according to one embodiment of the present disclosure;
Fig. 10 is a perspective view showing a portion of a battery module, a pack coolant pipe assembly, and a pack coolant pipe housing according to one embodiment of the present disclosure;
Fig. 11 is a partial view showing a coolant injection port and a connection port according to one embodiment of the present disclosure;
Fig. 12 is a perspective view showing a battery pack according to one embodiment of the present disclosure;
Fig. 13 is a partial view which enlarges and shows a section "B" of Fig. 12;
Fig. 14 is a partial view which enlarges and shows a section "C" of Fig. 12; and
Fig. 15 is a plane view of an arrangement of battery modules according to one embodiment of the present disclosure as viewed from above.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

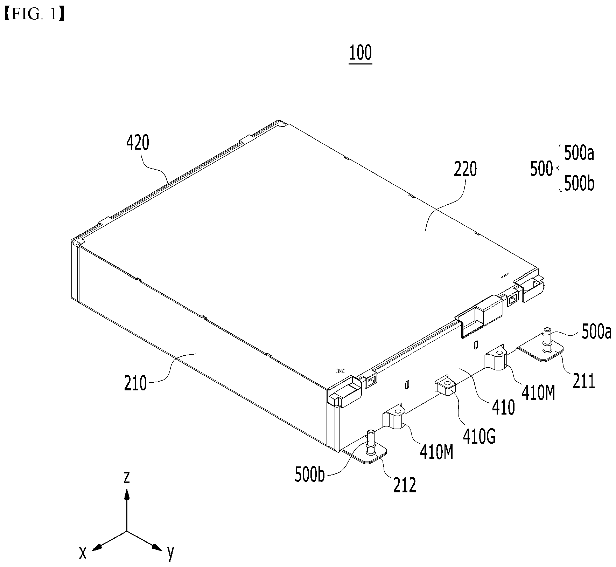

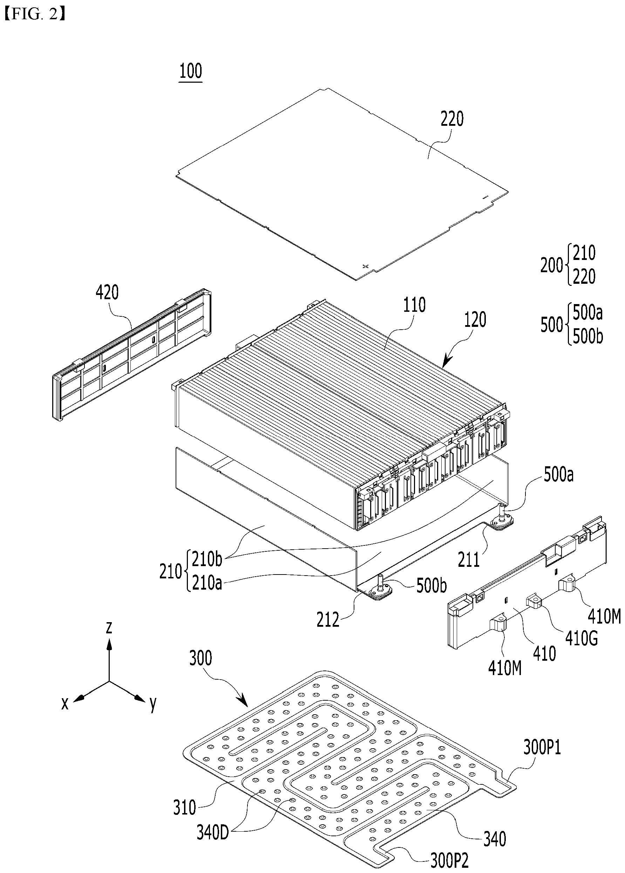

Fig. 1 is a perspective view showing a battery module according to one embodiment of the present disclosure. Fig. 2 is an exploded perspective view of the battery module of Fig. 1.

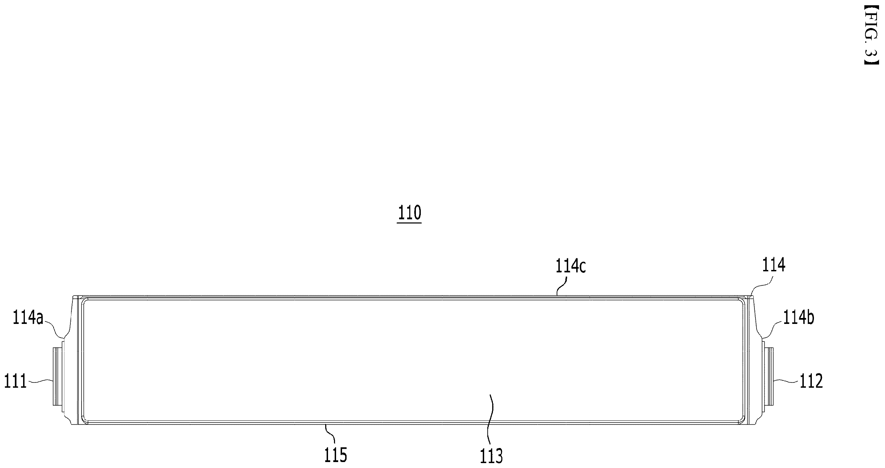

Fig. 3 is a perspective view of a battery cell included in the battery module of Fig. 2.

Referring to Figs. 1 to 3, a battery module 100 according to one embodiment of the present disclosure includes a battery cell stack 120 in which a plurality of battery cells 110 are stacked; a module frame 200 that houses the battery cell stack 120; a first end plate 410 and a second end plate 420 that cover one side and the other side of the battery cell stack, respectively; a heat sink 300 that is located under the bottom part 210a of the module frame 200; a coolant injection port 500a that supplies a coolant to the heat sink 300; and a coolant discharge port 500b that discharges the coolant from the heat sink 300.

First, the battery cell 110 may be a pouch-type battery cell. Such a pouch-type battery cell may be formed by housing an electrode assembly in a pouch case of a laminated sheet including a resin layer and a metal layer, and then fusing the outer peripheral part of the pouch case. Such battery cells 110 may be formed in a rectangular sheet-like structure. Specifically, the battery cell 110 according to the present embodiment has a structure in which two electrode leads 111 and 112 face each other and protrude from one end 114a and the other end 114b of the cell main body 113, respectively. The battery cell 110 can be produced by joining both ends 114a and 114b of a cell case 114 and one side part 114c connecting them in a state in which an electrode assembly (not shown) is housed in a cell case 114. In other words, the battery cell 110 according to the present embodiment has a total of three sealing parts, the sealing parts have a structure that is sealed by a method such as fusion, and the remaining other side part may be composed of a connection part 115.

However, the battery cell 110 described above is an exemplary structure, and it goes without saying that a unidirectional battery cell in which the two electrode leads protrude in the same direction is available.

Such a battery cell 110 may be composed by a plurality of numbers, and the plurality of battery cells 110 may be stacked so as to be electrically connected to each other, thereby forming a battery cell stack 120. Particularly, as shown in Fig. 2, a plurality of battery cells 110 may be stacked along the direction parallel to the x-axis. The battery cell case 114 generally has a laminated structure of resin layer/metal thin film layer/resin layer. For example, when the surface of the battery case is formed of an O (oriented)-nylon layer, it tends to slide easily due to external impact when stacking a plurality of battery cells to form a medium or large-sized battery module. Therefore, in order to prevent this problem and maintain a stable stacked structure of battery cells, an adhesive member such as a cohesive-type adhesive such as a double-sided tape or a chemical adhesive bonded by chemical reaction during adhesion can be attached to the surface of the battery case to form a battery cell stack 120.

When the battery cells 110 shown in Fig. 3 are stacked, any one electrode lead 111 of the battery cell 110 may protrude toward the first end plate 410, and the other electrode lead 112 of the battery cell 110 may protrude toward the second end plate 420. The connection part 115 of the battery cell 110 may be directed toward the bottom part 210a of the module frame 200.

The battery cell stack 120 according to one embodiment of the present disclosure may be a large-area module in which the number of battery cells 110 is increased more than before. In one example, 32 to 48 battery cells 110 may be included per battery module 100. In the case of such a large-area module, the length in a width direction of each of the end plates 410 and 420 becomes long. Here, the width direction of each of the end plates 410 and 420 may refer to a direction in which the battery cells 110 are stacked, that is, a direction parallel to the x-axis.

The module frame 200 for housing the battery cell stack 120 may include a U-shaped frame 210 and an upper cover 220.

The U-shaped frame 210 may include a bottom part 210a and two side surface parts 210b that extend upward at both ends of the bottom part 210a. The bottom part 210a may cover the lower surface of the battery cell stack 120, and the side surface part 210b may cover both side surfaces of the battery cell stack 120.

The upper cover 220 may be formed in a single plate-shaped structure that wraps the lower surface wrapped by the U-shaped frame 210 and the remaining upper surface (z-axis direction) excluding the both side surfaces. The upper cover 220 and the U-shaped frame 210 can be joined by welding or the like in a state in which the corresponding corner portions are in contact with each other, thereby forming a structure that covers the battery cell stack 120 vertically and horizontally. The battery cell stack 120 can be physically protected through the upper cover 220 and the U-shaped frame 210. For this purpose, the upper cover 220 and the U-shaped frame 210 may include a metal material having a predetermined strength.

Meanwhile, although not specifically shown in the figure, the module frame 200 according to a modification may be a mono frame in the form of a metal plate in which the upper surface, the lower surface, and both side surfaces are integrated. That is, this is not a structure in which the U-shaped frame 210 and the upper cover 220 are coupled with each other, but a structure in which the upper surface, the lower surface, and both side surfaces are integrated by being manufactured by extrusion molding.

The first end plate 410 and the second end plate 420 may be formed so that they are located on opened both sides (y-axis direction and -y-axis direction) of the module frame 200 so as to cover one side and the other side of the battery cell stack 120. The one side and the other side may be in opposite directions from each other. Particularly, the one side and the other side of the battery cell stack 120 may be in directions in which the electrode leads 111 and 112 of the battery cells 110 protrude, respectively. That is, the first end plate 410 and the second end plate 420 may be respectively located on one side and the other side of the battery cell stack 120 in a direction in which the electrode leads 111 and 112 protrude.

The first end plate 410 and the second end plate 420 can be located on the opened both sides of the module frame 200 to be joined to the module frame 200 by a method such as welding. The first end plate 410 and the second end plate 420 can include a metal material having a predetermined strength in order to physically protect the battery cell stack 120 and other electrical components from external impact.

Meanwhile, although not specifically shown in the figure, a busbar frame and an insulating cover may be located between the battery cell stack 120 and the first end plate 410 and between the battery cell stack 120 and the second end plate 420, respectively. A busbar is mounted on the busbar frame, so that electrode leads 111 and 112 of the battery cells 110 can be connected. The insulating cover can block the busbar and the electrode leads 111 and 112 from contacting the first end plate 410 or the second end plate 420.

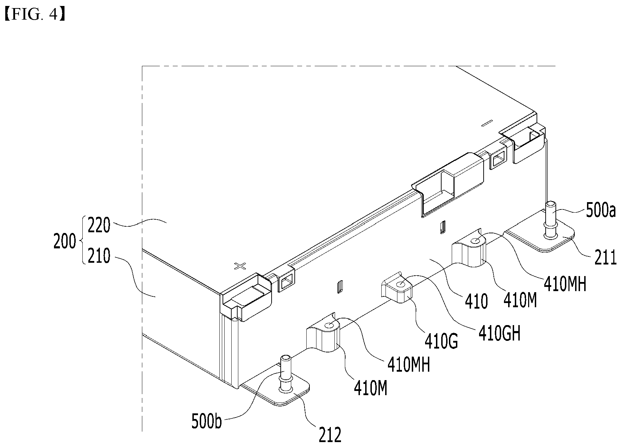

Next, the heat sink and the cooling port according to the present embodiment will be described in detail with reference to Figs. 4 to 7 and the like.

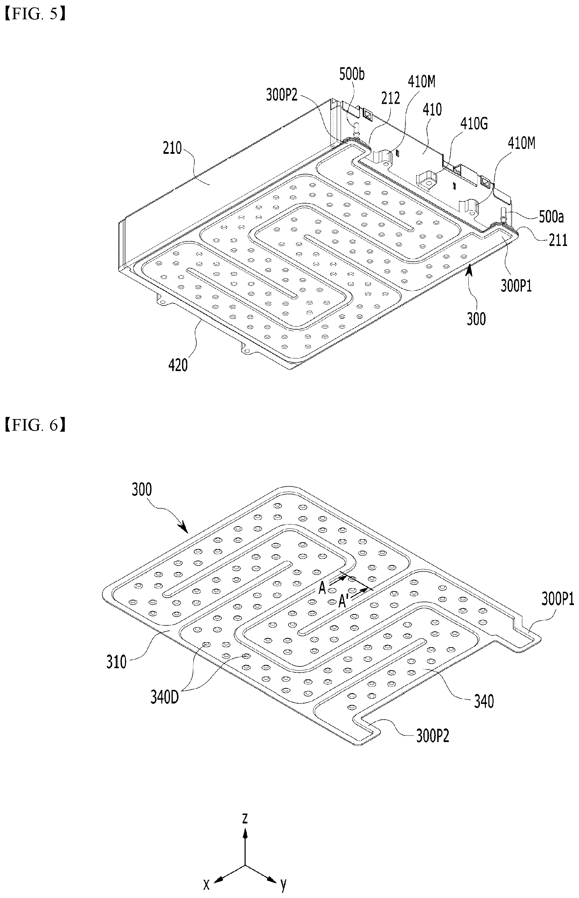

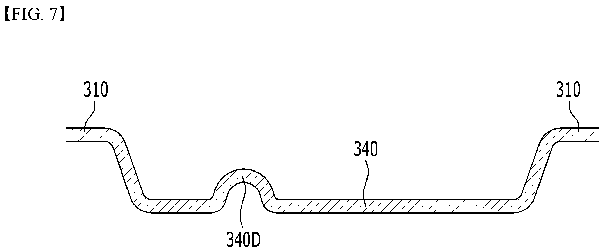

Fig. 4 is an exploded perspective view which enlarges and shows a first end plate section of the battery module of Fig. 1. Fig. 5 is a perspective view which shows the battery module of Fig. 1 by changing the viewing angle so that a heat sink is made visible. Fig. 6 is a perspective view showing a heat sink included in the battery module of Fig. 2. Fig. 7 is a cross-sectional view which shows a cross section taken along the cutting line A-A' of Fig. 6.

Referring to Figs. 4 to 7 together with Fig. 2, the heat sink 300 according to the present embodiment is located under the bottom part 210a of the module frame 200 as described above. Coolant may flow between the bottom part 210a of the module frame 200 and the heat sink 300. That is, the bottom part 210a of the module frame 200 and the heat sink 300 may form a coolant flow path, and the bottom part 210a of the module frame 200 may directly contact the coolant.

Specifically, the heat sink 300 according to the present embodiment may include a lower plate 310 that forms a basic frame of the heat sink 300 and joins to the bottom part 210a of the module frame 200, and a recessed part 340 that is formed to be recessed downward from the lower plate 310.

The recessed part 340 becomes a path through which the coolant flows. The lower plate 310 may be joined to the bottom part 210a of the module frame 200 by a welding method.

Meanwhile, the module frame 200 may include a first module frame protrusion 211 and a second module frame protrusion 212 that protrude from the bottom part 210a of the module frame 200 so as to pass the first end plate 410

At this time, the heat sink 300 may include a first heat sink protrusion 300P1 that protrudes from one side of the heat sink 300 to a portion where the first module frame protrusion 211 is located, and a second heat sink protrusion 300P2 that protrudes from one side of the heat sink 300 to a portion where the second module frame protrusion 212 is located. The recessed part 340 may extend from the first heat sink protrusion 300P1 to the second heat sink protrusion 300P2, wherein the first heat sink protrusion 300P1 and the second heat sink protrusion 300P2 may be an area into which a coolant is flowed in and an area through which a coolant is discharged, respectively. The first heat sink protrusion 300P1 and the first module frame protrusion 211 may be joined by welding, and the second heat sink protrusion 300P2 and the second module frame protrusion 212 may be joined by welding.

The recessed part 340 of the heat sink 300 corresponds to a portion in which the lower plate 310 is formed to be recessed downward. The recessed part 340 may be a tube having a U-shaped cross section cut along an xz plane or an yz plane perpendicular to the direction in which the coolant flow path extends, and a bottom part 210a may be located on the opened upper side of the U-shaped tube. In Fig. 7, a recessed part 340 having an opened upper part is illustrated. While the lower part 310 of the heat sink 300 being in contact with the bottom part 210a, the space between the recessed part 340 and the bottom part 210a becomes an area in which the coolant flows, that is, a flow path for the coolant. Thereby, the bottom part 210a of the lower frame 200 may directly contact with the coolant.

The method for preparing the recessed part 340 of the heat sink 300 is not particularly limited, but the U-shaped recessed part 340 with an opened upper side can be formed by providing a structure that is recessed and formed to the plate-shaped heat sink 300.

Meanwhile, the battery module 100 according to the present embodiment includes a cooling port 500, wherein the cooling port 500 includes a coolant injection port 500a that supplies a coolant to the heat sink 300, and a coolant discharge port 500b that discharges the coolant from the heat sink 300. Specifically, the coolant injection port 500a is located on the first module frame protrusion 211, and the coolant discharge port 500b is located on the second module frame protrusion 212.

The coolant supplied through the coolant injection port 500a passes between the first module frame protrusion 211 and the first heat sink protrusion 300P1, and is first flowed into the space between the recessed part 340 and the bottom part 210a. Then, the coolant circulates along the recessed part 340, passes between the second module frame projection 212 and the second heat sink projection 300P2, and is discharged through the coolant discharge port 500b. In this manner, a coolant circulation structure for the battery module 100 can be formed.

Meanwhile, although not shown in the figure, a thermal conductive resin layer including a thermal conductive resin may be located between the bottom part 210a of the module frame 200 of Fig. 2 and the battery cell stack 120. The thermal conductive resin layer can be formed by applying a thermal resin to the bottom part 210a and curing the applied thermal conductive resin.

The thermal conductive resin may include a thermal conductive adhesive material, and specifically, may include at least one of a silicone material, a urethane material, and an acrylic material. The thermal conductive resin is a liquid during application but is cured after application, so that it can perform the role of fixing a plurality of battery cells 110 constituting the battery cell stack 120. Further, since the thermal conductive resin has excellent heat transfer properties, the heat generated in the battery module 110 can be quickly transferred to the lower-side of the battery module.

The battery module 100 according to the present embodiment realizes a cooling-integrated structure of the module frame 200 and the heat sink 300, and thus can further improve cooling performance. The bottom part 210a of the module frame 200 serves to correspond to the upper plate of the heat sink 300, thereby capable of realizing a cooling-integrated structure. The cooling efficiency increases due to direct cooling, and the space utilization on the battery module 100 and the battery pack 1000 in which the battery module 100 is mounted can be increased through a structure in which the heat sink 300 is integrated with the bottom part 210a of the module frame 200.

Specifically, heat generated from the battery cell 110 can pass through a thermal conductive resin layer (not shown) located between the battery cell stack 120 and the bottom part 210a, the bottom part 210a of the module frame 200, and the coolant to be transferred to the outside of the battery module 100. By removing the unnecessary cooling structure according to the conventional one, the heat transfer path can be simplified and an air gap between respective layers can be reduced, so that the cooling efficiency or performance can be enhanced. Particularly, the bottom part 210a is composed of an upper plate of the heat sink 300, and the bottom part 210a directly abuts on the coolant, which is thus advantageous in that more direct cooling through the coolant is possible.

Further, through the removal of the unnecessary cooling structure, the height of the battery module 100 is reduced and thus, the cost can be reduced and the space utilization rate can be increased. Furthermore, since the battery module 100 can be arranged in a compact manner, the capacity or output of the battery pack 1000 including a plurality of battery modules 100 can be increased.

Meanwhile, as described above, the bottom part 210a of the module frame 200 may be weld-joined to a lower frame part 310 portion where the recessed part 340 is not formed in the heat sink 300. In the present embodiment, the cooling-integrated structure of the bottom part 210a of the module frame 200 and the heat sink 300 not only improves the above-mentioned cooling performance but also can have the effect of supporting the load of the battery cell stack 120 housed in the module frame 200 and reinforcing the stiffness of the battery module 100. In addition, the lower plate 310 and the bottom part 210a of the module frame 200 are sealed through a welding junction, and the like, so that the coolant can flow without leakage.

The battery module 100 according to the present embodiment includes 32 to 48 battery cells 110, which are more than the conventional one, for enhanced capacity and the like. However, since the number of battery cells 110 increases and the length in a width direction of the end plates 410 and 420 of the battery module 100 increases, the cooling efficiency of each battery cell 110 may decrease. Therefore, the battery module 100 according to the present embodiment realizes a cooling-integrated structure through the structure of the heat sink 300, so that the cooling efficiency can be increased while increasing the number of battery cells 110. That is, the cooling-integrated large-capacity battery module 100 can be formed.

For effective cooling, the recessed part 340 is preferably formed over the entire area corresponding to the bottom part 210a of the module frame 200. For this purpose, the recessed part 340 can be bent at least once and extend from one side to the other. In particular, the recessed part 340 is preferably bent several times to form the recessed part 340 over the entire area corresponding to the bottom part 210a of the module frame 200. As the coolant moves from the start point to the end point of the coolant flow path formed over the entire area corresponding to the bottom part 210a of the module frame 200, efficient cooling of the entire area of the battery cell stack 120 can be achieved.

Meanwhile, the coolant is a medium for cooling, and not particularly limited, but may be cooling water.

Meanwhile, a protrusion pattern 340D may be formed in the recessed part 340 of the heat sink 300 according to the present embodiment. In the case of a large-area battery module 100 in which the number of stacked battery cells increases more than before as in the battery cell stack 120 according to the present embodiment, the width of the coolant flow path may be formed wider and thus, the temperature deviation may become more excessive. As described above, in a large-area battery module, it may include the case where about 32 to 48 battery cells 110 are stacked in one battery module, in comparison with the case where about 12 to 24 battery cells are stacked in one battery module. In such a case, the protrusion pattern 340D according to the present embodiment generates the effect of substantially reducing the width of the cooling flow path, thereby minimizing the pressure drop and at the same time, reducing the temperature deviation between the coolant flow path widths. Therefore, it is possible to realize a uniform cooling effect.

Next, the first mounting part formed on the first end plate will be described in detail.

Referring to Figs. 2, 4 and 5 again, the first end plate 410 according to the present embodiment includes first mounting parts 410M formed on one surface of the first end plate 410. At this time, the coolant injection port 500a and the coolant discharge port 500b are located to be spaced apart from each other along the width direction of the first end plate 410, and the first mounting parts 410M are located between the coolant injection port 500a and the coolant discharge port 500b. As described above, the width direction of the first end plate 410 means a direction in which the battery cells 110 are stacked, that is, a direction parallel to the x-axis in Fig. 2.

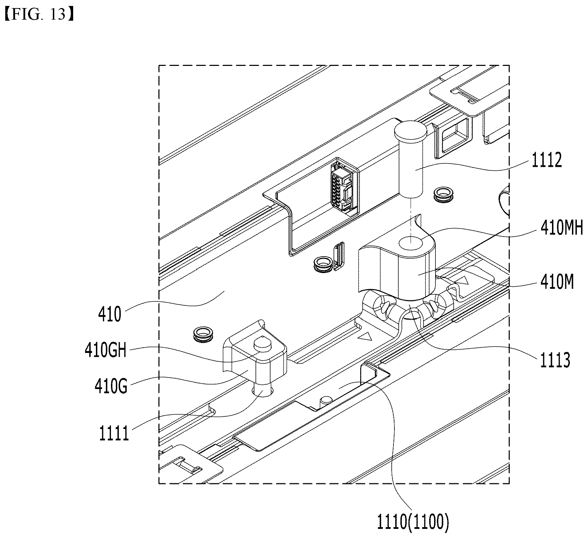

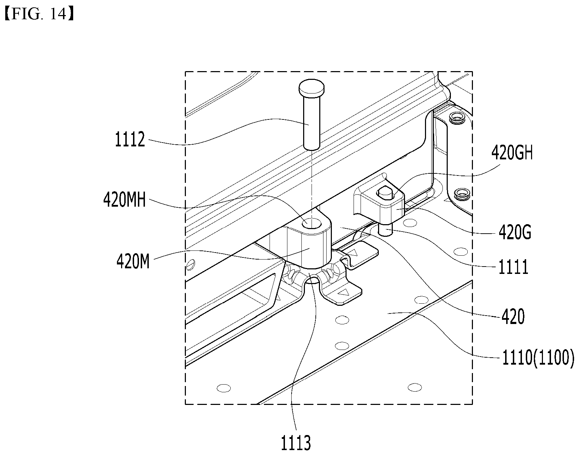

The first mounting part 410M may be a shape protruding in a direction perpendicular to one surface of the first end plate 410. Further, a mounting hole 410MH opened along a height direction may be formed in the first mounting portion 410M. Here, the height direction may mean a direction parallel to the z-axis in Fig. 2. When the battery module 100 is mounted on the pack frame, a bolt may pass through the mounting hole 410MH of the first mounting part 410M to be assembled to the pack frame. In this manner, the battery module 100 can be fixed and mounted to the pack frame. Details will be described later together with Figs. 13 and 14.

In the battery module 100 according to the present embodiment, the coolant injection port 500a and the coolant discharge port 500b are arranged to be spaced apart along the width direction, and a first mounting part 410M for fixing the battery module 100 is arranged therebetween. The first mounting part 410M is arranged near the central area of the first end plate 410, thereby attempting to improve the durability of the battery module 100 against vibration and impact. At the same time, the cooling port 500 is arranged in an area near both ends of the first end plate 410, thereby attempting to improve the space efficiency.

As a comparative example concerning the present disclosure, mounting parts may be arranged at both ends in the width direction of the end plate, respectively, and cooling ports may be arranged between the mounting parts. In this case, durability in the central area of the first end plate 410 becomes weak, and damage to the battery module 100 may occur due to vibration or impact. Particularly, in the case of a large-area battery module 100 in which the number of battery cells 110 stacked along the width direction increases, the length in the width direction of the end plates 410 and 420 increases. Thus, when the mounting parts are arranged at both ends, the central area of the end plates 410 and 420 becomes structurally weak, and sagging phenomenon due to weight may occur. Therefore, in the battery module 100 according to the present embodiment, the coolant injection port 500a and the coolant discharge port 500b are arranged so as to be spaced apart along the width direction, and the first mounting parts 410M are arranged therebetween, thereby attempting to increase the durability of the battery module 100 and at the same time secure space utilization. This is more effective in a large-area battery module 100 in which the number of battery cells increases more than before.

More specifically, the coolant injection port 500a and the coolant discharge port 500b may be located so as to correspond to both ends in the width direction of the first end plate 410. Further, any one of the first mounting parts 410M may be located between the central part of the first end plate 410 and the coolant injection port 500a, and the other one of the first mounting parts 410M may be located between the central part of the first end plate 410 and the coolant discharge port 500b. At this time, the central part of the first end plate 410 as used herein refers to the central point on the basis of the width direction of the first end plate 410. As an exemplary structure, one of the first mounting parts 410M is located at a point corresponding to 1/4 of the first end plate 410 with respect to the width direction, and the other one of the first mounting parts 410M may be located at a point corresponding to 3/4 of the first end plate 410.

Meanwhile, the first mounting part 410M is fixed to the pack frame through bolts described later, wherein a first module frame protrusion 211 where the coolant injection port 500a is located and a second module frame protrusion 212 where the coolant discharge port 500b is located protrude so as to pass the first end plate 410. At this time, the fastening force in the height direction by the bolt passing through the mounting hole 410MH of the first mounting part 410M can press the first module frame protrusion 211 and the second module frame protrusion 212 downward. Consequently, the first module frame protrusion 211 and the first heat sink protrusion 300P1 can be strongly adhered to each other, and the second module frame protrusion 212 and the second heat sink protrusion 300P2 can be strongly adhered to each other. Due to the pressing structure as described above, it is possible to improve the sealing performance with respect to the area through which the coolant flows and reduce the possibility of coolant leakage. Taken together, the battery module according to the present embodiment has the advantage that it can be simultaneously fixed and pressed to prevent coolant leakage.

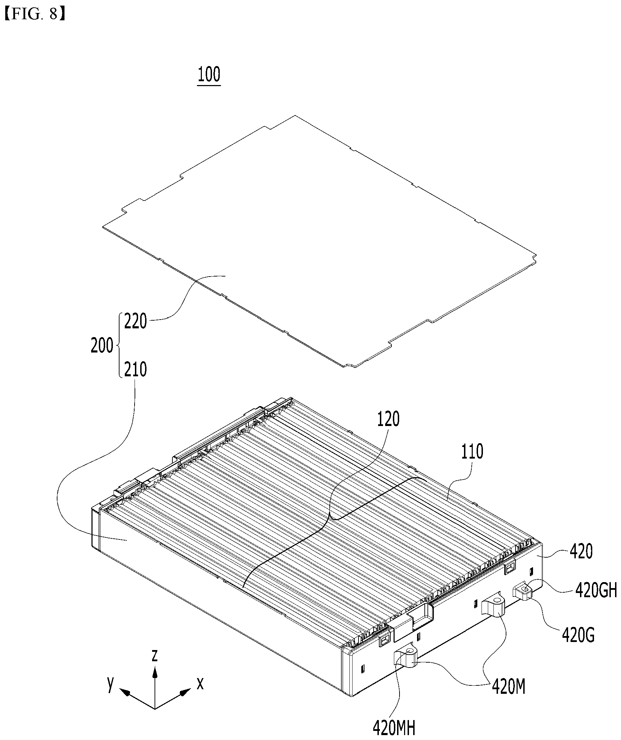

Next, a guide part or the like according to one embodiment of the present disclosure will be described in detail with reference to Fig. 8 and the like.

Fig. 8 is a perspective view which shows the battery module of Fig. 1 by changing the viewing angle so that the second end plate is made visible.

First, referring to Figs. 2 and 4, a first guide part 410G may be formed at the central part of the first end plate 410, and a guide hole 410GH opened along the height direction may be formed in the first guide part 410G. The height direction may mean a direction parallel to the z-axis in Fig. 2, similarly to the case of the mounting hole 410MH.

Next, referring to Fig. 8, second mounting parts 420M may be formed on the second end plate 420. Specifically, second mounting parts 420M may be formed between the central part of the second end plate 420 and one end in the width direction of the second end plate 420, and between the central part of the second end plate 420 and the other end in the width direction of the second end plate 420, respectively. That is, the second mounting parts 420M may be formed on one surface of the second end plate 420 so as to correspond to the positions of the first mounting parts 410M. At this time, the central part of the second end plate 420 as used herein refers to the central part on the basis of the width direction of the second end plate 420.

Further, similarly to the first mounting part 410M, a mounting hole 420MH opened along a height direction may be formed in the second mounting part 420M. That is, the battery module 100 according to the present embodiment can be fixed to the pack frame described later by the first mounting parts 410M formed on the first end plate 410 and the second mounting parts 420M formed on the second end plate 420. This will be described in detail again in Figs. 13 and 14.

Meanwhile, a second guide part 420G may be formed in the second end plate 420, and a guide hole 420GH opened in a height direction may be formed in the second guide part 420G. Functions of the first guide part 410G and the second guide part 420G will be described in detail with reference to Figs. 13 and 14.

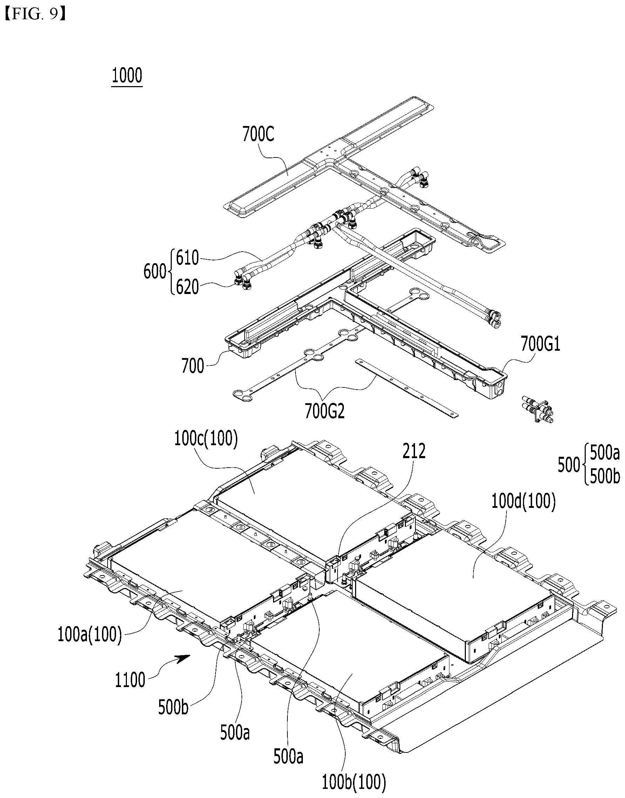

Next, a battery pack and a coolant circulation structure according to one embodiment of the present disclosure will be described in detail with reference to Figs. 9 to 11.

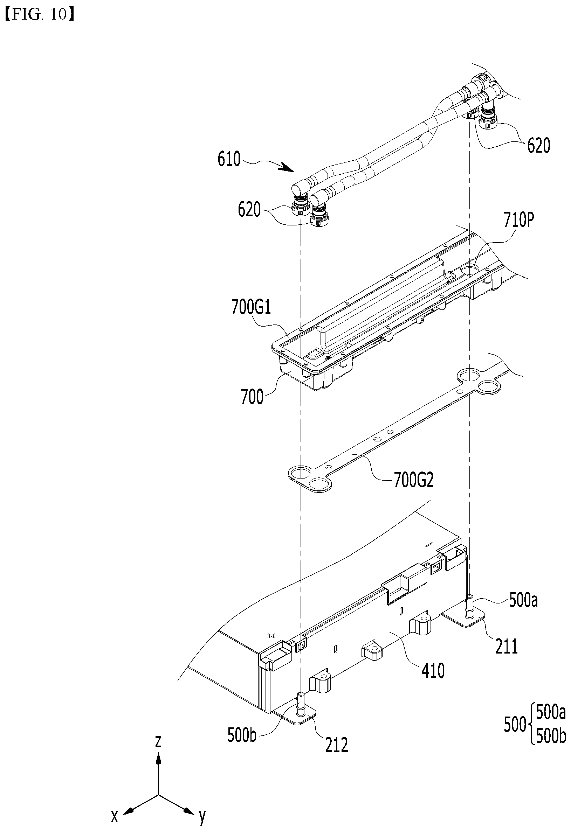

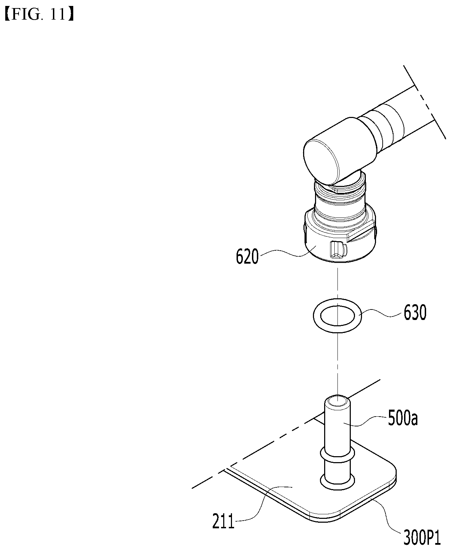

Fig. 9 is an exploded perspective view showing a battery pack according to one embodiment of the present disclosure. Fig. 10 is a perspective view showing a portion of a battery module, a pack coolant pipe assembly, and a pack coolant pipe housing according to one embodiment of the present disclosure. Fig. 11 is a partial view showing a coolant injection port and a connection port according to one embodiment of the present disclosure.

Referring to Figs. 9 to 11 together with Fig. 2, the battery pack 1000 according to one embodiment of the present disclosure includes a battery module 100 and a pack frame 1100 that houses the battery module 100. One or more battery modules 100 may be housed in the pack frame 1100. Meanwhile, although not specifically shown in the figure, the battery pack 1000 may further include a pack cover that covers the pack frame 1100, and the battery module 100 may be disposed in the space between the pack frame 1100 and the pack cover.

Meanwhile, the battery pack 1000 according to the present embodiment may include a pack coolant pipe assembly 600 connected to the cooling port 500 of the battery module 100 and a pack coolant pipe housing 700 that houses the pack coolant pipe assembly 600. When the battery module 100 is formed by a plurality of numbers, a first battery module 100a and a second battery module 100b facing each other can be arranged. The pack coolant pipe assembly 600 and the pack coolant pipe housing 700 may be located between the first battery module 100a and the second battery module 100b. Further, a third battery module 100c and a fourth battery module 100d facing each other may be further arranged.

That is, the battery pack 1000 according to the present embodiment may include the first to fourth battery modules 100a, 100b, 100c and 100d. The first and second battery modules 100a and 100b may be arranged along a direction perpendicular to the direction in which the battery cells 110 are stacked, and the third and fourth battery modules 100c and 100d may also be arranged along a direction perpendicular to the direction in which the battery cells 110 are stacked. The first battery module 100a and the second battery module 100b may be arranged so that the first end plates 410 face each other. The third battery module 100c and the fourth battery module 100d may also be arranged so that the first end plates 410 face each other.

The first to fourth battery modules 100a, 100b, 100c and 100d may be arranged in a lattice shape. The pack coolant pipe assembly 600 and the pack coolant pipe housing 700 are connected between the first battery module 100a and the second battery module 100b, between the third battery module 100c and the fourth battery module 100d, and between the second battery module 100b and the fourth battery module 100d, and can form a T-shaped structure.

All of the cooling ports 500 formed in each of the battery modules 100a and 100b may be arranged in the space between the first battery module 100a and the second battery module 100b. In other words, the module frame protrusions 211 and 212 of the first battery module 100a protrude in the direction where the second battery module 100b is located, and the module frame protrusions 211 and 212 of the second battery module 100b may protrude in a direction in which the first battery module 100a is located. Cooling ports 500 may be located on upper surface parts of the module frame protrusions 211 and 212, respectively.

At this time, the coolant injection port 500a of the first battery module 100a and the coolant discharge port 500b of the second battery module 100b may be arranged while facing each other, and the coolant discharge port 500b of the first battery module 100a and the coolant injection port 500a of the second battery module 100b may be arranged while facing each other. Similarly, the coolant injection port 500a of the third battery module 100c and the coolant discharge port 500b of the fourth battery module 100d may be arranged while facing each other, and the coolant discharge port 500b of the third battery module 100c and the coolant injection port 500a of the fourth battery module 100d may be arranged while facing each other.

The pack coolant pipe assembly 600 may include a pack coolant pipe 610 and a connection port 620 that connects the pack coolant pipe 610 and the cooling port 500 of the battery module 100. In one example, as shown in Fig. 11, the connection port 620 may be connected to the coolant injection port 500a. Specifically, the coolant injection port 500a is inserted and coupled to the lower side of the connection port 620, and a lower end of the connection port 620 may come into contact with an upper surface of the first module frame protrusion 211. That is, the coolant injection port 500a and the connection port 620 may be coupled in a form in which the coolant injection port 500a is inserted into the connection port 620.

In addition, a sealing member 630 may be located between the coolant injection port 500a and the connection port 620. The sealing member 630 may have a ring shape and may be inserted between the coolant injection port 500a and the connection port 620. While the sealing member 630 being inserted into the coolant injection port 500a, it may be inserted into the connection port 620 together with the coolant injection port 500a. The sealing member 630 can prevent the coolant from leaking in a gap between the coolant injection port 500a and the connection port 620.

Although not specifically shown in the figure, the coolant discharge port 500b may also be connected to another connection port 620 with a sealing member 630 interposed therebetween, similarly to the coolant injection port 500a.

Summarizing the above, in the battery pack 1000 according to the present embodiment, the coolant is injected into the coolant injection port 500a of the battery module 100 through any one pack coolant pipe 610 and the connection port 620, and the injected coolant circulates inside of the heat sink 300. After that, the coolant is discharged to another pack coolant pipe 610 through the coolant discharge port 500b and the other connection port 620 of the battery module 100. The coolant circulation structure of the battery pack 1000 can be formed in this way.

As described above, the pack coolant pipe housing 700 may house the pack coolant pipe assembly 600. The battery pack 1000 can be applied to vehicle means such as electric vehicles and hybrid vehicles. A situation may occur in which coolant such as cooling water may leak due to an assembly failure or an accident during operation. The leaked coolant penetrates into a plurality of parts constituting the battery pack 1000 which may cause a fire or explosion. According to the present embodiment, the pack coolant pipe housing 700 is formed so as to cover the bottom surface and side surface of the pack coolant pipe assembly 600, whereby the coolant leaked from the pack coolant pipe assembly 600 remains inside the pack coolant pipe housing 700, thereby being able to prevent a phenomenon in which leaked coolant penetrates into other parts of the battery pack 1000. At this time, it is preferable that the space between the plurality of battery modules 100 is utilized so that the pack coolant pipe housing 700 can house the leaked coolant to a maximum extent, thereby maximally ensuring the volume of the pack coolant pipe housing 700.

The opened upper part of the pack coolant pipe housing 700 may be covered by a housing cover 700C. Thereby, it is possible to prevent a phenomenon in which the coolant leaked from the pack coolant pipe assembly 600 leaks into the upper open space of the pack coolant pipe housing 700.

A first gasket 700G1 may be located between the pack coolant pipe housing 700 and the housing cover 700C. The first gasket 700G1 seals between the pack coolant pipe housing 700 and the housing cover 700C. The first gasket 700G1 may be formed along an upper edge of the pack coolant pipe housing 700. The housing cover 700C is closely adhered to the first gasket 700G1 formed along the upper edge of the pack coolant pipe housing 700, thereby being able to prevent a phenomenon in which the coolant leaks to the upper part of the pack coolant pipe housing 700.

Further, an opening 710P may be formed on the bottom surface of the pack coolant pipe housing 700 according to the present embodiment. A second gasket 700G2 may be coupled to a portion where the opening 710P is formed.

The second gasket 700G2 can be located between the module frame protrusions 211 and 212 and the pack coolant pipe housing 700 to seal between the module frame protrusions 211 and 212 and the pack coolant pipe housing 700. At this time, the coolant injection port 500a or the coolant discharge port 500b may pass through the second gasket 700G2 and the opening 710P upward, protrude into the pack coolant pipe housing 700, and can be connected to the connection port 620 in the manner described above.

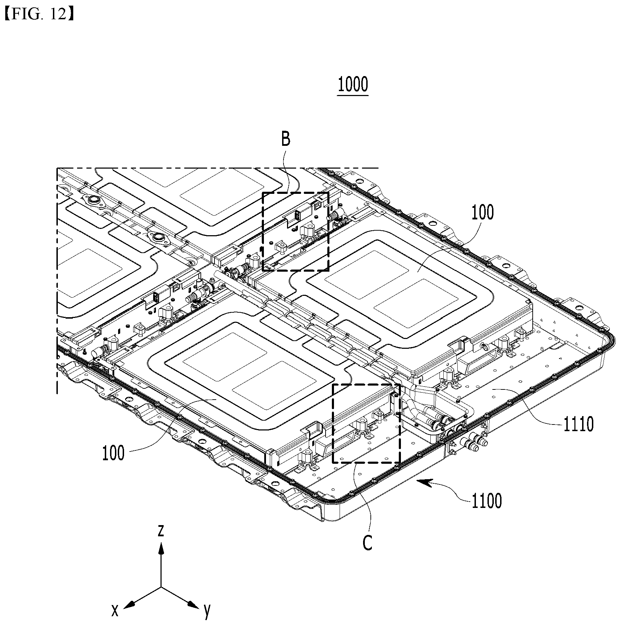

Next, a fixing method through a mounting part and a function of the guide part will be described in detail with reference to Figs. 12 to 14, and the like.

Fig. 12 is a perspective view showing a battery pack according to one embodiment of the present disclosure. Fig. 13 is a partial view which enlarges and shows a section "B" of Fig. 12. Fig. 14 is a partial view which enlarges and shows a section "C" of Fig. 12.

First, referring to Figs. 4, 12 and 13, as described above, the first mounting parts 410M are formed on the first end plate 410 of the battery module 100, and the first mounting parts 410M are fastened to the pack frame 1100.

Specifically, the pack frame 1100 may include a pack bottom part 1110 on which the battery module 100 is arranged, and a bolt 1112 may pass through the mounting hole 410MH of the first mounting part 410M to be assembled to the fastening part 1113 provided on the pack bottom part 1110. In one example, the bolt 1112 is a member having a screw thread formed on an outer peripheral surface, and may be assembled into a nut hole formed in the fastening part 1113. In this manner, the first end plate 410 of the battery module 100 may be fixed to the pack bottom part 1110.

Meanwhile, as described above, the first guide part 410G may be formed at the central part of the first end plate 410. A guide hole 410GH opened along the height direction may be formed in the first guide part 410G. Further, the pack frame 1100 may include a guide pin 1111 protruding upward from the pack bottom part 1110. Prior to fixing through the first mounting part 410M, when the battery module 100 is arranged on the pack bottom part 1110, the battery module 100 moves so that the guide pin 1111 passes through the guide hole 410GH of the first guide part 410G. Thereby, the battery module 100 having an increased volume or weight can be more accurately and stably located at a target location of the pack bottom part 1110, and it is also easy to make the mounting hole 410MH and the fastening part 1113 correspond to each other. That is, the first guide part 410G according to the present embodiment functions as a guide member for improving assembly of the battery module 100 to the pack frame 1100.

Next, referring to Figs. 8, 12 and 14, as described above, the second mounting parts 420M are formed on the second end plate 420 of the battery module 100, and the second mounting parts 420M are fastened to the pack frame 1100.

Similarly to the first mounting part 410M, a bolt 1112 may pass through the mounting hole 420MH of the second mounting part 420M and be assembled to the fastening part 1113 provided on the pack bottom part 1110. In one example, the bolt 1112 is a member having a screw thread formed on an outer peripheral surface, and may be assembled into a nut hole formed in the fastening part 1113. In this manner, the second end plate 420 of the battery module 100 may be fixed to the pack bottom part 1110.

Meanwhile, as described above, the second guide part 420G may be formed on the second end plate 420, and a guide hole 420GH opened along the height direction may be formed in the second guide part 420G. Prior to fixing through the second mounting part 420M, when the battery module 100 is arranged on the pack bottom part 1110, the battery module 100 moves so that the guide pin 1111 passes through the guide hole 420GH of the second guide part 420G. Thereby, the battery module 100 having an increased volume or weight can be more accurately and stably located at a target location on the pack bottom part 1110, and it is also easy to make the mounting hole 420MH and the fastening part 1113 correspond to each other. That is, the second guide part 420G according to the present embodiment functions as a guide member for improving assembly property of the battery module 100 to the pack frame 1100, similarly to the first guide part 410G.

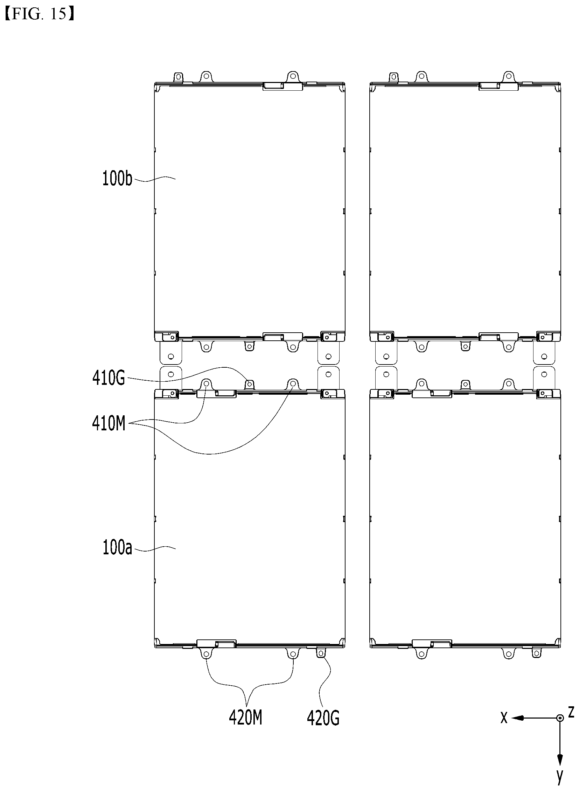

Fig. 15 is a plane view of an arrangement of battery modules according to one embodiment of the present disclosure as viewed from above.

Referring to Figs. 4, 8 and 15 together, a first guide part 410G may be formed at the central part of the first end plate 410. Particularly, the first guide part 410G may be located between the first mounting parts 410M.

Meanwhile, the second guide part 420G may be formed in at least one location between the central part of the second end plate 420 and both ends in the width direction of the second end plate 420. Figs. 8 and 15 show the state in which the second guide part 420G is formed between the central part of the second end plate 420 and one end in the width direction of the second end plate 420. More specifically, the second guide part 420G may be located between any one of the second mounting parts 420M and one end in the width direction of the second end plate 420.

Unlike the first guide part 410G formed in the central part of the first end plate 410, the second guide part 420G may be located close to one end in the width direction, rather than the central part of the second end plate 420. As shown in Fig. 15, when the battery module 100 is viewed from above, the first guide part 410G and the second guide part 420G may be arranged asymmetrically. By forming the first guide part 410G and the second guide part 420G to be located asymmetrically in this way, when the battery module 100 is mounted on the pack frame 1100, it is possible to prevent erroneous assembly. This is a design that prevents the positions of the first end plate 410 and the second end plate 420 from being changed from each other during assembly. The first guide part 410G and the second guide part 420G according to the present embodiment not only improve the capability of assembling the battery module 100 to the pack frame 1100, but also perform the function of preventing erroneous assembly of the battery module 100.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS(battery management system), a BDU(battery disconnect unit), and a cooling system to form a battery pack.

The battery module or the battery pack can be applied to various devices. For example, it can be applied to vehicle means such as an electric bike, an electric vehicle, and a hybrid electric vehicle, and may be applied to various devices capable of using a secondary battery, without being limited thereto.

Although preferred embodiments of the present disclosure have been described in detail above, the scope of the present disclosure is defined in the appended claims and is not limited to such embodiments.

### [Description of Reference Numerals]

100: battery module
110: battery cell
200: module frame
300: heat sink
410: first end plate
410M: first mounting part
500a: coolant injection port
500b: coolant discharge port

## Claims

1. A battery module (100) comprising:
a battery cell stack in which a plurality of battery cells (110) are stacked;
a module frame (200) that houses the battery cell stack;
a first end plate (410) and a second end plate (420) that cover one side and the other side of the battery cell stack, respectively;
a heat sink (300) that is located under a bottom part (210a) of the module frame (200);
a coolant injection port (500a) that supplies coolant to the heat sink (300); and
a coolant discharge port (500b) that discharges the coolant from the heat sink,
wherein the first end plate (410) comprises first mounting parts (410M) that are formed on one surface of the first end plate (410),
wherein the module frame (200) comprises a first module frame protrusion (211) and a second module frame protrusion (212) that protrude from the bottom part of the module frame so as to pass the first end plate (410),
wherein the coolant injection port (500a) is located on the first module frame protrusion (211), and the coolant discharge port (500b) is located on the second module frame protrusion (212), and
wherein the coolant injection port (500a) and the coolant discharge port (500b) are spaced apart from each other along the width direction of the first end plate (410), and the first mounting parts (410M) are located between the coolant injection port (500a) and the coolant discharge port (500b).

2. The battery module according to claim 1, wherein:
the coolant injection port (500a) and the coolant discharge port (500b) are located so as to correspond to both ends in a width direction of the first end plate (410).

3. The battery module according to claim 1, wherein:
a mounting hole (410MH) opened along the height direction is formed in the first mounting part (410M).

4. The battery module according to claim 1, wherein:
one of the first mounting parts (410M) is located between the central part of the first end plate (410) and the coolant injection port (500a) , and another one of the first mounting parts (410M) is located between the central part of the first end plate (410) and the coolant discharge port (500b).

5. The battery module according to claim 4, wherein:
a first guide part (410G) is formed in the central part of the first end plate (410), and a guide hole (410GH) opened along the height direction is formed in the first guide part (410G).

6. The battery module according to claim 5, wherein:
a second guide part (420G) is formed in at least one location between a central part of the second end plate (420) and both ends in a width direction of the second end plate.

7. The battery module according to claim 5, wherein:
second mounting parts (420M) are formed between the central part of the second end plate (420) and one end in the width direction of the second end plate (20), and between the central part of the second end plate (420) and the other end in the width direction of the second end plate (420), respectively.

8. The battery module according to claim 7, wherein:
a second guide part (420G) is formed between any one of the second mounting parts (420M) and the one end in the width direction of the second end plate (420).

9. The battery module according to claim 1, wherein:
the bottom part (210a) of the module frame (200) and the heat sink (300) form a flow path for the coolant, and
the bottom part (210a) of the module frame (200) is in contact with the coolant.

10. The battery module according to claim 1, wherein:
the heat sink (300) comprises a lower plate that is joined to the bottom part (210a) of the module frame (200), and a recessed part (340) formed to be recessed downward from the lower plate (310).

11. A battery pack (1000) comprising:
the battery module (100) as set forth in claim 1, and
a pack frame (1100) that houses the battery module,
wherein the first mounting parts (410M) are fastened to the pack frame (1100).

12. The battery pack according to claim 11, wherein:
a first guide part (410G) is formed in the central part of the first end plate (410), and
a guide hole (410GH) opened along the height direction is formed in the first guide part.

13. The battery pack according to claim 12, wherein:
the pack frame (1100) comprises a pack bottom part (1110) where the battery module is disposed and a guide pin (1111) protruding upward from the pack bottom part, and
when the battery module is disposed on the pack bottom part, the guide pin passes through the guide hole (410GH).

## Patentansprüche

1. Batteriemodul (100), welches aufweist:
einen Batteriezellstapel, in dem eine Mehrzahl von Batteriezellen (110) gestapelt sind;
einen Modulrahmen (200), der den Batteriezellstapel aufnimmt;
eine erste Endplatte (410) und eine zweite Endplatte (420), die jeweils eine Seite und die andere Seite des Batteriezellstapels abdecken;
einen Kühlkörper (300), der unter einem Bodenteil (210a) des Modulrahmens (200) angeordnet ist;
eine Kühlmittel-Einspritzöffnung (500a), die dem Kühlkörper (300) Kühlmittel zuführt; und
eine Kühlmittelabgabeöffnung (500b), die das Kühlmittel von dem Kühlkörper abgibt,
wobei die erste Endplatte (410) erste Montageteile (410M) aufweist, die an einer Oberfläche der ersten Endplatte (410) ausgebildet sind,
wobei der Modulrahmen (200) einen ersten Modulrahmenvorsprung (211) und einen zweiten Modulrahmenvorsprung (212) aufweist, die vom Bodenteil des Modulrahmens so vorstehen, dass sie die erste Endplatte (410) passieren,
wobei die Kühlmittel-Einspritzöffnung (500a) an dem ersten Modulrahmenvorsprung (211) angeordnet ist und die Kühlmittel-Abgabeöffnung (500b) an dem zweiten Modulrahmenvorsprung (212) angeordnet ist, und
wobei die Kühlmittel-Einspritzöffnung (500a) und die Kühlmittel-Abgabeöffnung (500b) entlang der Breitenrichtung der ersten Endplatte (410) mit Abstand voneinander angeordnet sind, und die ersten Montageteile (410M) zwischen der Kühlmittel-Einspritzöffnung (500a) und der Kühlmittel-Abgabeöffnung (500b) angeordnet sind.

2. Das Batteriemodul nach Anspruch 1, wobei
die Kühlmittel-Einspritzöffnung (500a) und die Kühlmittel-Abgabeöffnung (500b) so angeordnet sind, dass sie beiden Enden in Breitenrichtung der ersten Endplatte (410) entsprechen.

3. Das Batteriemodul nach Anspruch 1, wobei
ein Montageloch (410MH), das sich entlang der Höhenrichtung öffnet, in dem ersten Montageteil (410M) ausgebildet ist.

4. Das Batteriemodul nach Anspruch 1, wobei:
eines der ersten Montageteile (410M) zwischen dem zentralen Teil der ersten Endplatte (410) und der Kühlmittel-Einspritzöffnung (500a) angeordnet ist und ein anderes der ersten Montageteile (410M) zwischen dem zentralen Teil der ersten Endplatte (410) und der Kühlmittel-Abgabeöffnung (500b) angeordnet ist.

5. Das Batteriemodul nach Anspruch 4, wobei:
ein erste Führungsteil (410G) in dem zentralen Teil der ersten Endplatte (410) ausgebildet ist, und ein Führungsloch (410GH), das sich entlang der Höhenrichtung öffnet, in dem ersten Führungsteil (410G) ausgebildet ist.

6. Das Batteriemodul nach Anspruch 5, wobei:
das zweite Führungsteil (420G) an zumindest einem Ort zwischen einem zentralen Teil der zweiten Endplatte (420) und beiden Endteilen in Breitenrichtung der zweiten Endplatte ausgebildet ist.

7. Das Batteriemodul nach Anspruch 5, wobei:
zweite Montageteile (420M) jeweils zwischen dem zentralen Teil der zweiten Endplatte (420) und einem Ende in der Breitenrichtung der zweiten Endplatte (420) sowie zwischen dem zentralen Teil der zweiten Endplatte (420) und dem anderen Ende in der Breitenrichtung der zweiten Endplatte (420) ausgebildet sind.

8. Das Batteriemodul nach Anspruch 7, wobei:
ein zweites Führungsteil (420G) zwischen einem der zweiten Montageteile (420M) und dem einen Ende in der Breitenrichtung der zweiten Endplatte (420) ausgebildet ist.

9. Das Batteriemodul nach Anspruch 1, wobei:
das Bodenteil (210a) des Modulrahmens (200) und der Kühlkörper (300) einen Strömungsweg für das Kühlmittel bilden, und
das Bodenteil (210a) des Modulrahmens (200) mit dem Kühlmittel in Kontakt steht.

10. Das Batteriemodul nach Anspruch 1, wobei:
der Kühlkörper (300) eine untere Platte, die mit dem Bodenteil (210a) des Modulrahmens (200) verbunden ist, sowie ein vertieftes Teil (340), das von der unteren Platte (310) nach unten vertieft ausgebildet ist, aufweist.

11. Batteriepack (1000), welches aufweist:
das Batteriemodul (100) nach Anspruch 1, und
einen Packrahmen (1100), der das Batteriemodul (100) aufnimmt,
wobei die ersten Montageteile (410M) an dem Packrahmen (1100) befestigt sind.

12. Das Batteriepack nach Anspruch 11, wobei:
das erste Führungsteil (410G) in dem zentralen Teil der ersten Endplatte (410) ausgebildet ist, und
ein Führungsloch (410GH), das sich entlang der Höhenrichtung öffnet, in dem ersten Führungsteil ausgebildet ist.

13. Das Batteriepack nach Anspruch 12, wobei:
der Packrahmen (1100) einen Packbodenteil (1110), wo das Batteriemodul angeordnet ist, sowie einen Führungsstift (1111), der von dem Packbodenteil aufwärts vorsteht, und,
wenn das Batteriemodul auf dem Packboden angeordnet ist, der Führungsstift durch das Führungsloch (410GH) hindurchtritt.

## Revendications

1. Module de batterie (100) comprenant :
un empilement d'éléments de batterie dans lequel une pluralité d'éléments de batterie (110) sont empilés ;
un cadre de module (200) qui accueille l'empilement d'éléments de batterie ;
une première plaque d'extrémité (410) et une seconde plaque d'extrémité (420) qui couvrent un côté et l'autre côté de l'empilement d'éléments de batterie, respectivement ;
un dissipateur de chaleur (300) qui est situé au-dessous d'une partie basse (210a) du cadre de module (200) ;
un orifice d'injection de liquide de refroidissement (500a) qui alimente en liquide de refroidissement le dissipateur de chaleur (300) ; et
un orifice de refoulement de liquide de refroidissement (500b) qui refoule le liquide de refroidissement provenant du dissipateur de chaleur,
dans lequel la première plaque d'extrémité (410) comprend des premières parties de montage (410M) qui sont formées sur une surface de la première plaque d'extrémité (410),
dans lequel le cadre de module (200) comprend une première saillie de cadre de module (211) et une seconde saillie de cadre de module (212) qui font saillie à partir de la partie basse du cadre de module de façon à dépasser la première plaque d'extrémité (410),
dans lequel l'orifice d'injection de liquide de refroidissement (500a) est situé sur la première saillie de cadre de module (211), et l'orifice de refoulement de liquide de refroidissement (500b) est situé sur la seconde saillie de cadre de module (212), et
dans lequel l'orifice d'injection de liquide de refroidissement (500a) et l'orifice de refoulement de liquide de refroidissement (500b) sont espacés l'un de l'autre le long de la direction de largeur de la première plaque d'extrémité (410), et les premières parties de montage (410M) sont situées entre l'orifice d'injection de liquide de refroidissement (500a) et l'orifice de refoulement de liquide de refroidissement (500b).

2. Module de batterie selon la revendication 1, dans lequel :
l'orifice d'injection de liquide de refroidissement (500a) et l'orifice de refoulement de liquide de refroidissement (500b) sont situés de façon à correspondre aux deux extrémités dans une direction de largeur de la première plaque d'extrémité (410).

3. Module de batterie selon la revendication 1, dans lequel :
un trou de montage (410MH) ouvert le long de la direction de hauteur est formé dans la première partie de montage (410M).

4. Module de batterie selon la revendication 1, dans lequel :
l'une des premières parties de montage (410M) est située entre la partie centrale de la première plaque d'extrémité (410) et l'orifice d'injection de liquide de refroidissement (500a), et une autre des premières parties de montage (410M) est située entre la partie centrale de la première plaque d'extrémité (410) et l'orifice de refoulement de liquide de refroidissement (500b).

5. Module de batterie selon la revendication 4, dans lequel :
une première partie de guidage (410G) est formée dans la partie centrale de la première plaque d'extrémité (410), et un trou de guidage (410GH) ouvert le long de la direction de hauteur est formé dans la première partie de guidage (410G).

6. Module de batterie selon la revendication 5, dans lequel :
une seconde partie de guidage (420G) est formée à au moins un emplacement entre une partie centrale de la seconde plaque d'extrémité (420) et les deux extrémités dans une direction de largeur de la seconde plaque d'extrémité.

7. Module de batterie selon la revendication 5, dans lequel :
des secondes parties de montage (420M) sont formées entre la partie centrale de la seconde plaque d'extrémité (420) et une extrémité dans la direction de largeur de la seconde plaque d'extrémité (20), et entre la partie centrale de la seconde plaque d'extrémité (420) et l'autre extrémité dans la direction de largeur de la seconde plaque d'extrémité (420), respectivement.

8. Module de batterie selon la revendication 7, dans lequel :
une seconde partie de guidage (420G) est formée entre l'une quelconque des secondes parties de montage (420M) et l'une extrémité dans la direction de largeur de la seconde plaque d'extrémité (420).

9. Module de batterie selon la revendication 1, dans lequel :
la partie basse (210a) du cadre de module (200) et le dissipateur de chaleur (300) forment un chemin d'écoulement pour le liquide de refroidissement, et
la partie basse (210a) du cadre de module (200) est en contact avec le liquide de refroidissement.

10. Module de batterie selon la revendication 1, dans lequel :
le dissipateur de chaleur (300) comprend une plaque inférieure qui est jointe à la partie basse (210a) du cadre de module (200), et une partie en retrait (340) formée pour être en retrait vers le bas à partir de la plaque inférieure (310).

11. Bloc-batterie (1000) comprenant :
le module de batterie (100) selon la revendication 1, et
un cadre de bloc (1100) qui accueille le module de batterie,
dans lequel les premières parties de montage (410M) sont fixées au cadre de bloc (1100).

12. Bloc-batterie selon la revendication 11, dans lequel :
une première partie de guidage (410G) est formée dans la partie centrale de la première plaque d'extrémité (410), et
un trou de guidage (410GH) ouvert le long de la direction de hauteur est formé dans la première partie de guidage.

13. Bloc-batterie selon la revendication 12, dans lequel :
le cadre de bloc (1100) comprend une partie basse de bloc (1110) où le module de batterie est disposé et une goupille de guidage (1111) faisant saillie vers le haut à partir de la partie basse de bloc, et
lorsque le module de batterie est disposé sur la partie basse de bloc, la goupille de guidage traverse le trou de guidage (410GH).
